# EUROPEAN PATENT SPECIFICATION

(11) **EP 1 692 910 B1**
(45) Date of publication and mention of the grant of the patent: **23.07.2008**
(21) Application number: 05702026.5
(22) Date of filing: 25.01.2005
(51) Int. Cl.: H04Q 11/04, H04M 3/30

(54) **CONNECTION ARCHITECTURE FOR XDSL BROABAND NETWORKS**
VERBINDUNGSARCHITEKTUR FÜR XDSL-BREITBANDNETZWERKE
ARCHITECTURE DE CONNEXION POUR RESEAUX A LARGE BANDE XDSL

(30) Priority: 06.02.2004 ES 200400271
(43) Date of publication of application: 23.08.2006
(73) Proprietor: Tyco Electronics Raychem S.A., 28108 Alcobendas Madrid (ES)
(72) Inventor: ARIAS MIGUEL, Juan, Tomas, E-28100 Alcobendas (Madrid) (ES)
(74) Representative: Jay, Anthony William
(86) International application number: PCT/GB2005/000270
(87) International publication number: WO 2005/079106

(56) References cited:
- EP-A- 1 193 958
- WO-A-01/65816
- WO-A-02/47429
- WO-A-20/04032563

## Description

The present invention relates to connection architecture for xDSL broadband networks, for non-intrusive testing of said networks which reduces the bridge tap produced due to an excessively long cable between the test head and the telephone pair, which might lead to a temporary loss of signal.

The basic object of the invention is thus to enable the use of a length of cable sufficiently long to meet the specific requirements for each particular case, and for which amplification of the signal has been planned.

The invention comes under the field of telecommunications and, more specifically, connection systems for xDSL networks.

To provide a high-speed data service via an ADSL line, for example, the voice signal that comes from the switching signal must join the high-speed xDSL signal, provided by the digital subscriber line access multiplexer (DSLAM), i.e. the equipment which provides access to high-speed lines.

This is combined or separated via a filter or splitter, which is normally installed together with the DSLAM in the same electronic components cabinet.

One of the problems encountered with the preceding configurations is the ability to provide a metallic access point which enables the combined signal to be extracted to a test head, in such a way that the status of both the subscriber loop and the DSLAM can be tested.

One solution for obtaining these metallic access points consists of the use of additional equipment provided on a RACK separate from the intermediate distribution frame, a RACK to which the combined voice plus xDSL signal from the DSLAM is carried, before arriving at the intermediate distribution frame, a solution which has the basic problem of the need to unwire and rewire, with the resulting impact on costs.

Another solution consists of adding the strip which permits obtaining the metallic contacts to the intermediate distribution frame strip. In this case it would be necessary to rewire the combined voice plus data signal bridge, and another bridge should be established between the intermediate distribution frame strip and the new strip which permits obtaining the metallic contacts. An additional problem is the dual occupancy of space on the intermediate distribution frame, due to the new strip.

Special mention should be made of the Spanish patent of invention with application number 200202264 whereby metallic access points for each line are provided without needing to wire or rewire, and in which the connection architecture has a horizontal strip to which the voice signal from the switching exchange is carried and from which, together with the use of a bridge, said signal reaches the intermediate distribution frame, continuing from here with a new cable to the unit formed by the filter and the DSLAM, i.e. the digital subscriber line access multiplexer assigned to supply the high-speed xDSL digital signal, returning the combined voice + data signal to said intermediate distribution frame and from there to the vertical distribution frame.

More specifically, the intermediate distribution frame has a connection element with break and test contacts, and the metallic access block is on the same connection element of the intermediate distribution frame or on the vertical frame, allowing the metallic access signal to be obtained which is subsequently carried to the test head without the need to wire or wire a bridge or any cable in the network.

Such a system is for example disclosed in document WO 02 47429 A.

However, this solution has a practical limitation due to the length of wiring between the pairs to be tested or monitored and the test head because, when this length is substantial, e.g. over 100 metres, distortions in the broadband signal are produced, which may result from signal losses on a part of the band (bridge tap), so that the signal would not be duly recognized by the modem which functions using the corresponding communications protocol, which would request a correct signal from the network and which, after several failed attempts, would interrupt the communication between the user and the network.

The connection architecture proposed by the invention resolves the above problem in a completely satisfactory way, reducing the bridge tap produced by excessively long wiring between the pair and the test head and, consequently, allowing the use of greater lengths of cable without affecting the service.

To do this and, to be more specific, the invention consists in installing a high-impedance probe close to the pair, i.e. in close proximity to test access matrix (TAM) system, avoiding desynchronisation problems between the DSLAM signal and the user's modem, when non-intrusive tests or checks are being carried out.

The high-impedance probe can be installed in any of the elements comprising the FTAM system, i.e., it can be installed in the master unit, the control box, the TAM board, FTAM cartridge or in any other FTAM element.

Preferably, although this is not essential, the signal transmitted by the non-intrusive high-impedance probe can be amplified, which allows longer test lengths to be used to the test head. In accordance with this characteristic, the high-impedance probe is preferably active.

The wideband amplifier can be installed in any of the elements which comprise the FTAM system, including the master unit, the control box, the TAM board, the FTAM cart cartridge or any other.

The wideband amplifier can be connected by means of connectors in any of the elements comprising the FTAM system, including the master unit, the control box, the TAM board, the FTAM cartridge or any other.

This means that, when there is any type of improvement or modification to the access matrix system, the amplifier can be replaced by another which combines the required characteristics at any time. This layout therefore allows for plug and play connection of new amplifiers for new test heads, new services and/or new frequency ranges.

In accordance with an embodiment of the invention, this is done via a frame which is located in the main distribution frame or active cabinet, the invention thus allowing a longer test wire and/or the installation of test head at a longer distance from the frame.

The connection architecture for xDSL broadband networks in the invention, installed in a frame-based test access matrix system (FTAM) which is installed in a main distribution frame or active cabinet, allows a longer test bus length, in order to group bigger quantities of pairs per system and/or the installation of the test head at a longer distance from the frame.

To complement the description given and to help provide a better understanding of the characteristics of the invention, in accordance with a preferred practical example of embodiment thereof, and as an integral part of said description, a set of drawings are provided which show, in an illustrative and non-limitative way, the following:
- Figure 1.-: shows a known connection architecture for xDSL networks, with metallic contact points for the test head.
- Figure 2.-: shows a similar architecture to the preceding figure, in which the test head has been moved to within close proximity of the master unit.
- Figure 3.-: shows an embodiment of the invention, in which the position of the test head remains unaltered in the conventional form, the high-impedance probe being moved, however, inside the test access matrix system (FTAM).

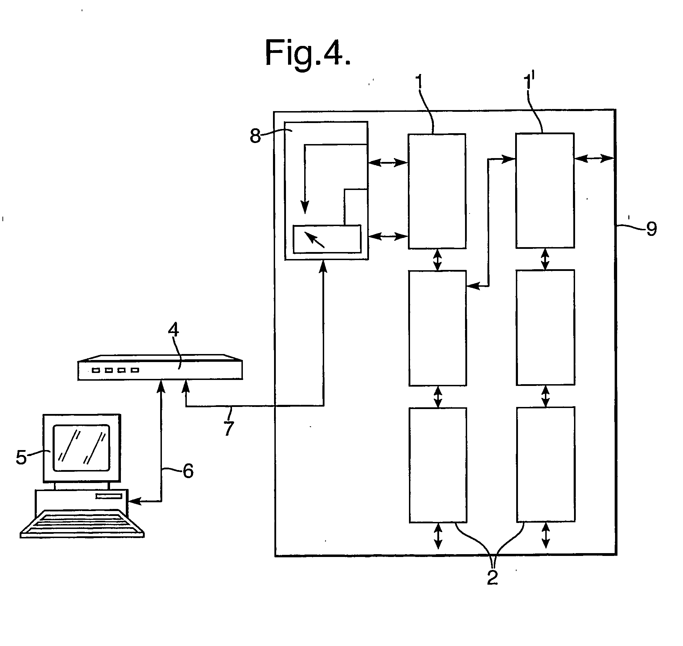

- Figure 4.-: shows a second embodiment of the invention, in which the position of the test head has not been moved either with respect to the conventional layout, although the high-impedance probe has been moved to within close proximity of the test access matrix system (FTAM).

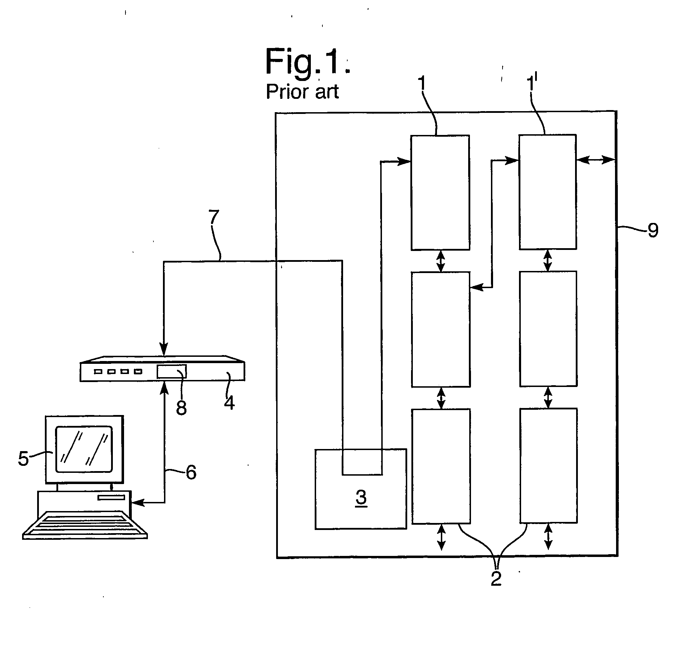

Figure 1, which corresponds to the conventional technique, diagrammatically represents the master unit (1) and the control box (1') with its corresponding metallic access points (2) and connection block (3) to a test head (4), with the corresponding supervisor (5) connected to the test head (4) via the cable (6) with its corresponding communications protocol with the cable (7), which joins the connections block (3) to the test head (4), being of considerable length, which in practice can frequently exceed 100 metres.

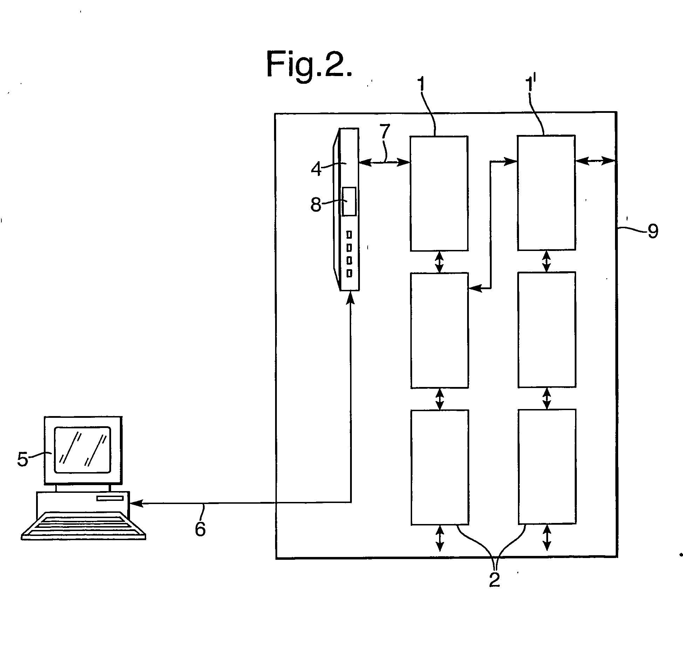

Figure 2 illustrates a new connection architecture for xDSL broadband networks, in which the high-impedance probe (8), normally set up in the test head (4), is brought physically closer to the metallic access block and, more specifically by incorporating said test head (4) in the main distribution frame (9), whereby the length of the cable (7) is minimum and, consequently, the aforementioned effects of signal loss disappear. However, this solution is not completely satisfactory, since in this case the cable (6) increases in length.

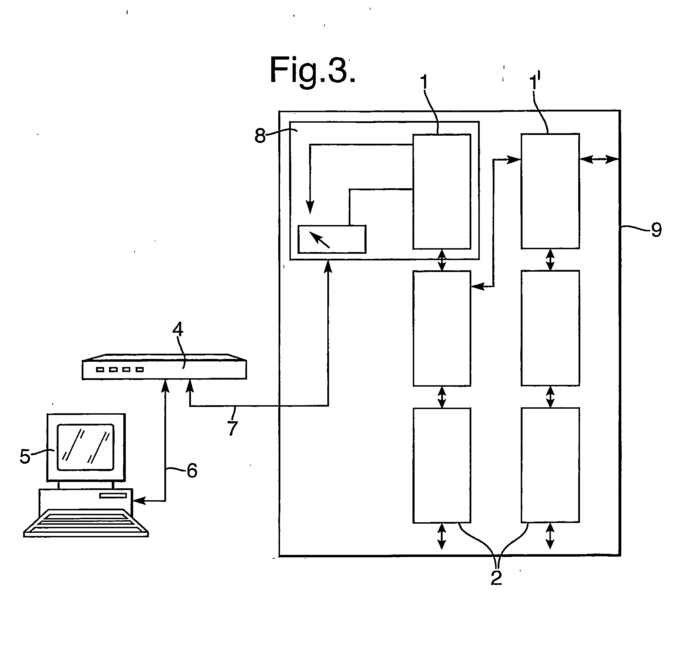

Figure 3 represents an embodiment of the invention, in which the high-impedance probe (8) is moved to the main distribution frame (9), which is integrated in the master unit (1), so that the latter's effect on the signal allows the length of cable (7) which connects up to the test head (4) to be maintained, with the high values mentioned earlier but without loss of signal. In this way, the distance between the test head (4) and the supervisor computer (5) is significantly reduced, thus avoiding the drawbacks suffered by the preceding technique in Figure 2.

Included in the field of the invention is the installation of the high-impedance probe in any of the elements comprising the test access matrix system (FTAM), including the master unit, the control box, the TAM board, the FTAM cartridge, or any other element.

Said high-impedance probe (8) can thus be integrated in the master unit (1), as shown in Figure 3, or can be external to said master unit (1) but housed like the latter in the main distribution frame (9), as shown in Figure ,4.

## Claims

1. Connection architecture for xDSL broadband networks for use with a test head (4) comprising a main distribution frame having a master unit (1), a control box (1') and a series of frames (2) with metallic access points for connection with the non-intrusive test head (4) in the telephone pairs of the broadband networks, **characterised in** the test head having a high-impedance probe (8) housed in the main distribution frame located close to a telephone pair, in order to reduce the bridge tap produced by excessively long wiring between the telephone pair and the test head (4).

2. Connection architecture for xDSL broadband networks according to claim 1, **characterized in that** a wideband amplifier is included in the network to amplify the signal transmitted by the high-impedance probe, to thereby obtain longer test bus lengths (7).

3. Connection architecture for xDSL broadband networks, according to claims 1 or 2, having a frame based test access matrix system (FTAM), implemented in the main distribution frame.

4. Connection architecture for xDSL broadband networks, according to at least one of the preceding claims, **characterized in that** the high-impedance probe (8) together with the test head (4), is located in the main distribution frame (9).

5. Connection architecture for xDSL broadband networks, according to at least one of the preceding claims, **characterized in that** the high-impedance probe (8) is integrated in the master unit (1) and is outside the test head (4) locatable remotely from the main distribution frame (9).

6. Connection architecture for xDSL broadband networks, according to at least one of the claims 1 to 4, **characterized in that** the internal high-impedance probe (8) is connected directly to the master unit (1) and physically independent from the test head (4) locatable remotely from the main distribution frame (9).

7. Connection architecture for xDSL broadband networks, according to any of the claims 3 to 6, **characterized in that** the high-impedance probe (8) is installed in any of the elements making up the test access matrix system (FTAM).

8. Connection architecture for xDSL broadband networks, according to claim 7, **characterized in that** the high-impedance probe (8) is installed in any of the master unit, the control board, the TAM board, or the FTAM cartridge.

9. Connection architecture for xDSL broadband networks, according to any of the claims 3 to 7, **characterized in that** the wideband amplifier is installed in any of the elements making up the test access matrix system (FTAM).

10. Connection architecture for xDSL broadband networks, according to claim 9, **characterized in that** the wide-band amplifier is installed in the master unit, the control board, the TAM board, or the FTAM system cartridge.

11. Connection architecture for xDSL broadband networks, according to any of the claims 3 to 7, **characterized in that** the wideband amplifier can be connected by means of connectors in any of the elements making up the test access matrix system (FTAM).

12. Connection architecture for xDSL broadband networks, according to claim 11, **characterized in that** the wideband amplifier is connected by means of connectors to the master unit, the control board, the TAM board, or the FTAM cartridge.

## Patentansprüche

1. Verbindungsarchitektur für xDSL-Breitbandnetzwerke zur Verwendung mit einem Prüfkopf (4), umfassend einen Hauptverteiler mit einer Mastereinheit (1), einem Steuerungskasten (1') und einer Serie von Rahmen (2) mit metallischen Zugangspunkten zur Verbindung mit dem berührungslosen Prüfkopf (4) in den Telefonleitungspaaren der Breitbandnetzwerke, **dadurch gekennzeichnet, daß** der Prüfkopf eine hochohmige Sonde (8) aufweist, die im Hauptverteiler nahe einem Telefonleitungspaar befindlich untergebracht ist, um die Anschlußleitung zu verringern, die durch eine übermäßig lange Leitungsanordnung zwischen dem Telefonleitungspaar und dem Prüfkopf (4) entsteht.

2. Verbindungsarchitektur für xDSL-Breitbandnetzwerke nach Anspruch 1, **dadurch gekennzeichnet, daß** ein Breitbandverstärker in das Netzwerk einbezogen ist, um das durch die hochohmige Sonde gesendete Signal zu verstärken, um **dadurch** längere Prüfbuslängen (7) zu erlangen.

3. Verbindungsarchitektur für xDSL-Breitbandnetzwerke nach Anspruch 1 oder 2 mit einem rahmengestützten Prüfzugangsmatrixsystem (FTAM), das im Hauptverteiler implementiert ist.

4. Verbindungsarchitektur für xDSL-Breitbandnetzwerke nach mindestens einem der vorhergehenden Ansprüche, **dadurch gekennzeichnet, daß** die hochohmige Sonde (8) zusammen mit dem Prüfkopf (4) im Hauptverteiler (9) angeordnet ist.

5. Verbindungsarchitektur für xDSL-Breitbandnetzwerke nach mindestens einem der vorhergehenden Ansprüche, **dadurch gekennzeichnet, daß** die hochohmige Sonde (8) in die Mastereinheit (1) integriert ist und außerhalb des Prüfkopfs (4) entfernt vom Hauptverteiler (9) angeordnet werden kann.

6. Verbindungsarchitektur für xDSL-Breitbandnetzwerke nach mindestens einem der Ansprüche 1 bis 4, **dadurch gekennzeichnet, daß** die interne hochohmige Sonde (8) direkt mit der Mastereinheit verbunden ist und physisch unabhängig vom Prüfkopf (4) entfernt vom Hauptverteiler (9) angeordnet werden kann.

7. Verbindungsarchitektur für xDSL-Breitbandnetzwerke nach einem der Ansprüche 3 bis 6, **dadurch gekennzeichnet, daß** die hochohmige Sonde (8) in einem der Elemente installiert ist, die das Prüfzugangsmatrixsystem (FTAM) bilden.

8. Verbindungsarchitektur für xDSL-Breitbandnetzwerke nach Anspruch 7, **dadurch gekennzeichnet, daß** die hochohmige Sonde (8) in einem von folgendem installiert ist: die Mastereinheit, die Steuerungsplatine, die TAM-Platine oder die FTAM-Kassette.

9. Verbindungsarchitektur für xDSL-Breitbandnetzwerke nach einem der Ansprüche 3 bis 7, **dadurch gekennzeichnet, daß** der Breitbandverstärker in einem der Elemente installiert ist, die das Prüfzugangsmatrixsystem (FTAM) bilden.

10. Verbindungsarchitektur für xDSL-Breitbandnetzwerke nach Anspruch 9, **dadurch gekennzeichnet, daß** der Breitbandverstärker in einem von folgendem installiert ist: die Mastereinheit, die Steuerungsplatine, die TAM-Platine oder die FTAM-Kassette.

11. Verbindungsarchitektur für xDSL-Breitbandnetzwerke nach einem der Ansprüche 3 bis 7, **dadurch gekennzeichnet, daß** der Breitbandverstärker mittels Verbindern in einem der Elemente verbunden werden kann, die das Prüfzugangsmatrixsystem (FTAM) bilden.

12. Verbindungsarchitektur für xDSL-Breitbandnetzwerke nach Anspruch 11, **dadurch gekennzeichnet, daß** der Breitbandverstärker mittels Verbindern mit der Mastereinheit, der Steuerungsplatine, der TAM-Platine oder der FTAM-Kassette verbunden ist.

## Revendications

1. Architecture de connexion pour des réseaux large bande xDSL pour une utilisation avec une tête de test (4) comprenant un répartiteur principal comportant une unité maître (1), une boîte de commande (1') et une série de répartiteurs (2) avec des points d'accès métalliques pour une connexion à la tête de test (4) non intrusive dans les paires de téléphones des réseaux large bande, **caractérisée en ce que** la tête de test comporte une sonde à haute impédance (8) logée dans le répartiteur principal située à proximité d'une paire de téléphones, afin de réduire le branchement en dérivation produit par un câblage excessivement long entre la paire de téléphones et la tête de test (4).

2. Architecture de connexion pour des réseaux large bande xDSL selon la revendication 1, **caractérisée en ce qu'**un amplificateur large bande est inclus dans le réseau pour amplifier le signal transmis par la sonde à haute impédance, pour obtenir de ce fait de plus grandes longueurs de bus de test (7).

3. Architecture de connexion pour des réseaux large bande xDSL, selon la revendication 1 ou 2, comportant un système de matrice d'accès de test à base de répartiteur (FTAM) mis en oeuvre dans le répartiteur principal.

4. Architecture de connexion pour des réseaux large bande xDSL, selon au moins l'une des revendications précédentes, **caractérisée en ce que** la sonde à haute impédance (8) et la tête de test (4) sont situées dans le répartiteur principal (9).

5. Architecture de connexion pour des réseaux large bande xDSL, selon au moins l'une des revendications précédentes, **caractérisée en ce que** la sonde à haute impédance (8) est intégrée dans l'unité maître (1) et se trouve à l'extérieur de la tête de test (4) pouvant être située à distance du répartiteur principal (9).

6. Architecture de connexion pour des réseaux large bande xDSL, selon au moins l'une des revendications 1 à 4, **caractérisée en ce que** la sonde à haute impédance (8) interne est connectée directement à l'unité maître (1) et est physiquement indépendante de la tête de test (4) pouvant être située à distance du répartiteur principal (9).

7. Architecture de connexion pour des réseaux large bande xDSL, selon l'une quelconque des revendications 3 à 6, **caractérisée en ce que** la sonde à haute impédance (8) est installée dans n'importe lequel des éléments composant le système de matrice d'accès de test (FTAM).

8. Architecture de connexion pour des réseaux large bande xDSL, selon la revendication 7, **caractérisée en ce que** la sonde à haute impédance (8) est installée dans l'un quelconque de l'unité maître, du panneau de commande, du panneau TAM, ou de la cartouche FTAM.

9. Architecture de connexion pour des réseaux large bande xDSL, selon l'une quelconque des revendications 3 à 7, **caractérisée en ce que** l'amplificateur large bande est installé dans l'un quelconque des éléments composant le système de matrice d'accès de test (FTAM).

10. Architecture de connexion pour des réseaux large bande xDSL, selon la revendication 9, **caractérisée en ce que** l'amplificateur large bande est installé dans l'unité maître, le panneau de commande, le panneau TAM, ou la cartouche de système FTAM.

11. Architecture de connexion pour des réseaux large bande xDSL, selon l'une quelconque des revendications 3 à 7, **caractérisée en ce que** l'amplificateur large bande peut être connecté au moyen de connecteurs dans l'un quelconque des éléments composant le système de matrice d'accès de test (FTAM).

12. Architecture de connexion pour des réseaux large bande xDSL, selon la revendication 11, **caractérisée en ce que** l'amplificateur large bande est connecté au moyen de connecteurs à l'unité maître, au panneau de commande, au panneau TAM, ou à la cartouche FTAM.
